# EUROPEAN PATENT APPLICATION

(11) **EP 1 433 692 A1**
(43) Date of publication of application: **30.06.2004**
(21) Application number: 03104792.1
(22) Date of filing: 18.12.2003
(51) Int. Cl.: B62D 33/06

(54) **Driving location in a vehicle and method for arranging such a driving location**

(30) Priority: 23.12.2002 SE 0203833
(71) Applicant: Scania CV AB (publ), 151 87 Södertälje (SE)
(72) Inventor: Nyberg, Richard, 641 35 Katrineholm (SE); Sandberg, Lena, 945 33 Rosvik (SE)
(74) Representative: Sjögren, Stina

(57) **Abstract**

The present invention relates to a driving location in a vehicle and a method for fitting such a driving location. The driving location comprises a steering control (1) for steering the vehicle, a pedal (10) for controlling an operating function of the vehicle, and a driving seat (11) for a driver (9). The driving location comprises a fastening element (3) which enables common fastening of the steering control (1) and the pedal (10) to a stationary surface (4) of the vehicle. The fitting position of the driving seat is determined by means of at least one positional indication (a, b) which is relative to at least one specific point (A, B) of the fastening element (3).

## Description

### BACKGROUND TO THE INVENTION, AND STATE OF THE ART

The invention relates to a driving location in a vehicle according to the preamble of claim 1 and a method for arranging such a driving location according to the preamble of claim 10.

A vehicle's steering wheel, pedals and driving seat are usually fitted separately in a driving space. The positions for fitting the abovementioned components are often affected by the siting of other equipment in the driving space. In many cases this results in a driving space in which the steering wheel, pedals and driving seat occupy positions which are far from optimum for a driver from an ergonomic point of view. The position of the steering wheel and the position of the driving seat are usually adjustable so that each individual driver can according to his/her own inclinations adjust these components to a desired position. However, the positions of the pedals are fixed and it is therefore not always possible to achieve ergonomically optimum siting of the pedals relative to the steering wheel and the driving seat. Such is particularly the case when the permanent position of the pedals is offset somewhat sideways relative to the steering wheel and the driving seat. In such cases, adjusting the steering wheel and the driving seat does not help, since they are usually not adjustable sideways.

US 4 392 546 refers to a driving space in a working vehicle such as a tractor. The steering wheel, pedals and driving seat of that vehicle are connected together by a relatively complicated platformlike structure fitted above the floor surface of the driving space. The result is that when a driver adjusts the seat in a vertical direction the steering wheel and the pedals are adjusted likewise. A separate adjusting mechanism also makes it possible for the driving seat to be adjusted relative to the steering wheel and the pedals. The platform structure is relatively complex and therefore expensive to manufacture. It also occupies a relatively large amount of space. In motor vehicles such as buses and trucks in particular, it is necessary to make maximum use of all available space, which means that installing such a platform module would result in shortage of space for other components in the driving space.

### SUMMARY OF THE INVENTION

The object of the present invention is to provide a driving space in a vehicle and a method for arranging such a driving space, which driving space guarantees a driver the possibility of achieving an ergonomically correct driving position in a simple manner and at low cost.

The object stated above is achieved with the driving space mentioned in the introduction which is characterised by what is indicated in the characterising part of claim 1. With such a fastening element which enables common fastening of the steering control and the pedal to a stationary surface of the vehicle, the steering control and the pedal can be guaranteed mutual siting which results in ergonomically correct driving positions for a driver's hands and feet. The common fastening element may be fastened to a supporting member or the like by, for example, bolting or welding. The common fastening element may take the form of the existing fastening element of a conventional steering control to which the pedals are fitted in a suitable manner. The cost of such modification of the fastening of the pedals is likely to be relatively small.

According to a preferred embodiment of the present invention, the driving seat is fitted separately in the vehicle in a predetermined position relative to the position of the fastening element. On the basis of information about the dimensions of the steering control, the pedals and the driving seat it is possible to determine an optimum fitting position for the driving seat relative to the fastening element. The driving seat manufacturer usually gives measurements concerning the region of the driving seat's H-point, i.e. the region in which a seated person's hip may be situated depending on the position to which the seat is adjusted, and an R-point which denotes the theoretical position of the H-point when the seat is adjusted to its lowest and most rearward position. On the basis of this information, the driving seat can then be provided with an ergonomically correct position relative to the fastening element and hence relative both to the steering control and to the pedals. A driver is thus provided with correct mutual positioning of his/her hands, feet and hips. As the driving seat is arranged separately, there is no need for any elongate connecting elements such as platforms or the like to be arranged between the driving seat and the pedals if the driving seat is to be guaranteed the possibility of being arranged in an optimum position from the ergonomic point of view. With advantage, the fitting position of the driving seat is determined by means of at least one positional indication relative to a specific point of the fastening element. The positional indication may be a distance measured from the specific point of the fastening element. The specific point of the fastening element may be marked in a suitable manner or be an angle or the like of the fastening element which is identifiable without any specific marking.

According to another preferred embodiment of the invention, the fastening element is fitted in the vehicle in such a way that the specific point is situated adjacent to the vehicle's floor surface and that said positional indication denotes a perpendicular distance from the specific region of the fastening element along the floor surface. This means that the positional indication indicates the desired siting of the driving seat relative to the fastening element. The fastening element is thus fitted adjacent to or at a short distance from the floor surface. This makes it easy to measure with good accuracy, from a specific point situated on a lower edge of the fastening element, the desired distance along the floor surface from the fastening element to the driving seat. Preferably, the driving seat is fitted by means of at least one fitting element to the floor surface of the vehicle and said positional indication indicates the distance from the specific point of the fastening element to a certain point of the fitting element. This makes it easy to determine with good accuracy the desired position of the fastening element. With advantage, said certain point of the fitting element indicates the position for a prearranged hole through which a screw or the like may be inserted in order to fasten the fitting element to the floor surface. For a fitting element which is made in one piece, positional indications for two screws are usually necessary for ensuring that the fitting element assumes a correct position. When the locations for the holes have been marked, it is easy to place the fitting element in a correct position and apply the screws. With advantage, the vehicle is a bus. In buses, the floor of the driving space usually comprises a panel of wooden material. This means that the screws as above can be fastened in the wooden panel at substantially any desired locations.

According to another preferred embodiment of the present invention, the steering control is fitted to the fastening element via an adjusting mechanism which allows adjustable setting of the position of the steering control. The common fastening element results in such siting of the steering control relative to the pedals as to guarantee an ergonomically correct driving position for a driver whose body is of substantially average size. For drivers whose body size differs markedly from the average, an ergonomically optimum driving position can be achieved by adjusting the position of the steering wheel. With advantage, the driving seat comprises an adjusting mechanism which allows adjustable setting of the position of the driving seat. The driving seat may thus be adjustable in a height direction and in the longitudinal direction of the vehicle. This is an advantage in that it may be necessary to adjust the position of the driving seat in order to achieve a distance between the driving seat and the pedals which provides an ergonomically correct driving position for drivers whose body size differs markedly from the average. As the steering wheel, the pedals and the driving seat are thus oriented in a substantially optimum ergonomic position for a driver of average body size, substantially any driver can achieve an ergonomically correct driving position by relatively moderate adjustments of the positions of the steering control and the driving seat. It is thus possible to guarantee that substantially any driver, irrespective of body size, can achieve an optimum ergonomic driving position.

The object stated above is also achieved with the method mentioned in the introduction which is characterised by what is indicated in the characterising part of claim 10. Fitting the steering control and the pedals to a common fastening element enables mutual siting of them which from an ergonomic point of view is substantially optimum for a driver of average size. There is therefore no risk of the pedals being fitted in an incorrect position relative to the steering control. The method also comprises fitting the driving seat separately in the vehicle in a predetermined position relative to the position of the fastening element. The fitting position of the driving seat is then determined by at least one positional indication relative to a specific point of the fastening element. The driving seat may then be fitted by means of at least one fitting element to a floor surface of the vehicle. Said positional indication may determine the distance from the specific point of the fastening element to a screw hole in the fitting element. The positional indication may be determined on the basis of information concerning the specific driving seat's H-point region and R-point. With advantage, the driving location is arranged in a bus. The floor surface in a bus is usually made of wood, in which case the fitting element can be screwed firmly to the floor surface at substantially any desired location.

### BRIEF DESCRIPTION OF THE DRAWINGS

A preferred embodiment of the invention is described below by way of example with reference to the attached drawings, in which:
- Fig. 1: depicts an embodiment of a driving space according to the present invention and
- Fig. 2: depicts a lower fitting element in Fig. 1 as seen from above.

### DETAILED DESCRIPTION OF A PREFERRED EMBODIMENT OF THE INVENTION

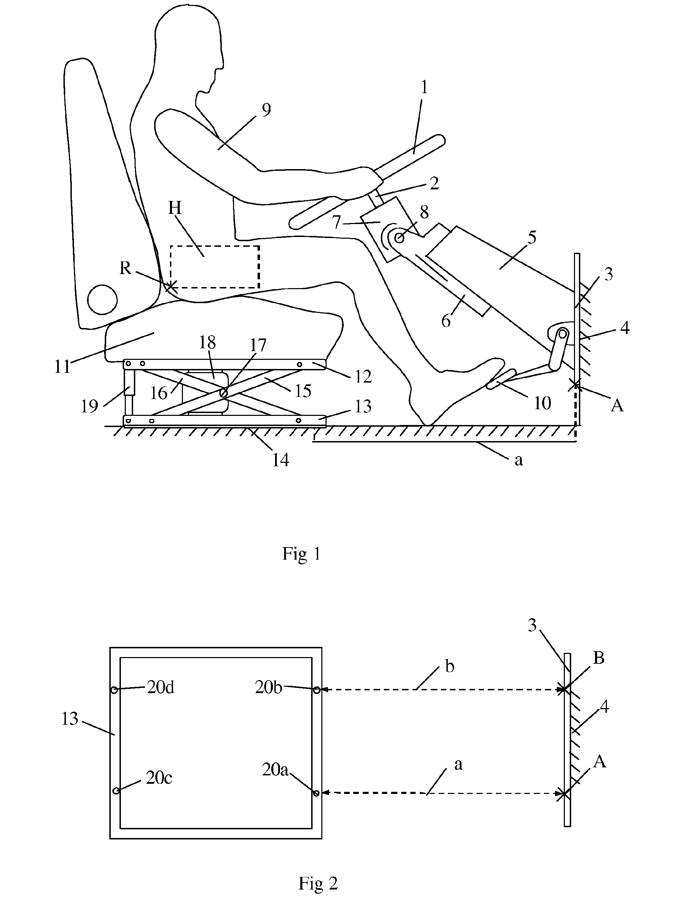

Fig. 1 depicts a driving space in a vehicle. The driving space comprises a steering control in the form of a steering wheel 1. From the steering wheel 1 a steering column 2 extends, which comprises a first part of a motion-transmitting mechanism for transmitting steering movements of the steering wheel 1 to the vehicle's steerable wheels. The steering wheel 1 is settable, by means of an adjusting mechanism, to a desired position relative to a fastening element 3. The fastening element 3 is fastened to a stationary surface 4 of the vehicle. The stationary surface 4 may be part of a supporting member or the like. The fastening element 3 may be fastened to the stationary surface by bolting or welding. The adjusting mechanism comprises a first portion 5 firmly connected to the fastening element 3, a second portion 6 arranged for movement relative to the first portion 5, and a third portion in the form of a bearing housing 7 in which the steering wheel is supported for rotation. The bearing housing is arranged for pivoting relative to the second portion 6 by means of an articulation 8. A driver 9 may use an undepicted control to adjust the steering wheel 1 to a desired height position and rotational position by means of the adjusting mechanism. A pedal which in this case is an accelerator pedal 10 is fitted to the fastening element 3. The vehicle's brake pedal and clutch pedal are not depicted but are with advantage also fitted to the fastening element 3. Their common fitting to the fastening element 3 guarantees the steering wheel and the pedal 10 correct mutual siting from an ergonomic point of view for a driver 9 of average size. The common fitting of the steering wheel 1 and the pedals 10 in the fastening element 3 enables a driver 9 whose body size differs from the average to adjust the steering wheel 1 relative to the pedals 10 until an ergonomically correct position is achieved.

The driving space comprises a driving seat 11 for the driver 9. The driving seat manufacturer provides information inter alia concerning the specific driving seat's H-point region and R-point. The H-point region denotes the region within which a seated person's hip may be situated depending on the position to which the seat is adjusted. The R-point denotes the theoretical position of the H-point when the driving seat 11 is adjusted to its lowest and most rearward position. The driving seat 11 comprises in this case an upper fitting element 12 firmly connected to a surface on the underside of the seat 11. A lower fitting element 13 is firmly connected by screws or the like to a floor surface 14 of the driving space. The upper fitting element 12 and the lower fitting element 13 have a corresponding rectangular shape. A pantograph-style mechanism with a first arm 15 and a second arm 16 extends crosswise between the upper fitting element 12 and the lower fitting element 13. The arms 15, 16 are articulatedly connected together at a middle portion by means of an articulation point 17. The respective arms 15, 16 each have one end connected articulatedly to the fitting elements 12, 13 and the other end arranged for sliding in the fitting elements 12, 13. The arms 15, 16 thus form a pantograph-style mechanism which allows substantially vertical movement of the driving seat 11 relative to the stationary floor surface 14. In this case an air spring 18 is fastened between the upper fitting element 12 and the lower fitting element 13 to make it possible to adjust the height position of the driving seat 11 and to allow a springing movement of the seat 11 relative to the floor surface 14. A damper 19 is also fastened between the upper fitting element 12 and the lower fitting element 13. The damper 19, which may be hydraulic, allows damping of the movements of the driving seat 11 relative to the floor surface 14. The driver 9 can use an undepicted control to set the driving seat 11 to a desired height position by means of the air spring 18 and the pantograph-style mechanism.

The fastening element 3 is fitted initially to the stationary surface 4 situated in a forward portion of the driving space. The fastening element 3 may be fitted by bolting or be welded firmly to the stationary surface 4. When the fastening element 3 has been fitted, it is necessary for the driving seat 11 to be fitted in a correct position relative to the fastening element 3. On the basis of information about the H-point region and the R-point it is possible to determine between certain points of the driving seat 11 and the fastening element 3 at least one distance a, b at which the driving seat 11 has a substantially optimum ergonomic position relative to the pedals 10 and the steering wheel 1. To define such a distance a, the fastening element 3 is provided with a first marked point A and a second marked point B. The points A, B are arranged on the lower edge of the fastening element 3, which is situated at a relatively small distance from the floor surface 14. The points A, B may be marked in a suitable manner on the fastening element 3 so as to be easily noticed by a fitter who has to fit the driving seat 11. The lower fitting element 13 is viewed from above in Fig. 2. The fitting element 13 has a rectangular shape and a number of prearranged holes 20a-d. The fitter is provided with prior information about the perpendicular distances a, b from the respective points A, B (which are adjacent to the floor surface 14) to the desired positions of the fitting holes 20a, b.

In this case the vehicle is a bus and the floor in the driving space comprises a panel of wooden material such as a plywood sheet. To fit the driving seat correctly, the fitter measures a desired perpendicular distance a from the fitting point A to the first hole 20a and marks the measured point in a suitable manner. The fitter then measures the perpendicular distance b from the marking point B and marks the measured point in a suitable manner. This is followed by placing the driving seat 11 in position in such a way that the lower fitting element 13 is so positioned that the markings made are visible through the holes 20a, 20b. Screws are then inserted through the holes 20a, b and screwed in so that the fastening element 13 is fastened to the panel beneath at the markings made. Thereafter supplementary bolts may be inserted in the holes 20c, d so that the driving seat 11 is robustly secured.

The fact that the steering wheel 1 and the pedals 10 are fitted to a common fastening element 3 means that these controls have predetermined mutual siting which from an ergonomic point of view is substantially optimum for a driver of average size. It also means that there is no risk of the pedals 10 being offset sideways relative to the steering wheel 1, which may otherwise be a risk if the positions of the pedals 10 are modified to cater for other equipment fitted in the vicinity of the pedals 10. The marking points A, B on the fastening element 3 provide a fitter with clear guidance making it possible for the driving seat 11 to be fitted in a desired position with great accuracy relative to the fastening element 3. The driving seat 11 is thus also provided with optimum ergonomic position relative to the steering wheel 1 and the pedals 10. Nor in this case is there any risk of the pedals 10 being offset sideways relative to the driving seat 11. A driver of average size is thus provided with substantially optimum mutual positioning of his/her hands, feet and hips when in a driving situation.

The invention is in no way limited to the embodiment described but may be varied freely within the scopes of the claims. The number of marking points A, B on the fastening elements may be varied as desired. They need not necessarily be marked but may, for example, take the form of the lower angles of the fastening element 3. The element 13 fitting the driving element 11 to the floor surface 14 need not be rectangular in shape. It may also comprise two or more separate fitting elements. The positional indication for the fitting position of the driving seat need not necessarily be a rectilinear distance but may be a positional indication in two or more dimensions. The driving seat 11 and the steering wheel 1 need not be adjustable.

## Claims

1. A driving location in a vehicle whereby the driving location comprises a steering control (1) for steering the vehicle, a pedal (10) for controlling an operating function of the vehicle, and a driving seat (11) for a driver (9), **characterised in that** the driving location comprises a fastening element (3) which enables common fastening of the steering control (1) and the pedal (10) relative to a stationary surface (4) of the vehicle.

2. A driving location according to claim 1, **characterised in that** the driving seat (11) is fitted separately in the vehicle at a predetermined position relative to the position of the fastening element (3).

3. A driving location according to claim 2, **characterised in that** the fitting position of the driving seat is determined by means of at least one positional indication (a, b) relative to at least one specific point (A, B) of the fastening element (3).

4. A driving location according to claim 3, **characterised in that** the fastening element (3) is fitted in the vehicle in such a way that the specific point (A, B) is adjacent to the vehicle's floor surface (14) and that said positional indication (a, b) denotes a perpendicular distance from the specific point (A, B) of the fastening element (3) along the floor surface (14).

5. A driving location according to claim 4, **characterised in that** the driving seat (11) is fitted by means of at least one fitting element (13) to the floor surface (14) of the vehicle and that said positional indication (a, b) denotes the distance from the specific point (A, B) of the fastening element (3) to a certain point (20a, b) of the fitting element (13).

6. A driving location according to claim 5, **characterised in that** said point of the fitting element (13) indicates the position for a prearranged hole (20a, b) through which a screw or the like may be inserted in order to fasten the fitting element (13) to the floor surface (14).

7. A driving location according to any one of the foregoing claims, **characterised in that** the vehicle is a bus.

8. A driving location according to any one of the foregoing claims, **characterised in that** the steering control (1) is fitted to the fastening element (3) via an adjusting mechanism (5-7) which allows adjustable setting of the position of the steering control (1).

9. A driving location according to any one of the foregoing claims, **characterised in that** the driving seat (11) comprises an adjusting mechanism (15-18) which enables adjustable setting of the position of the driving seat (11).

10. A method for arranging a driving location in a vehicle whereby the driving location comprises a steering control (1) for steering the vehicle, a pedal (10) for controlling an operating function of the vehicle, and a driving seat (11) for a driver (9), **characterised by** the step of fitting the steering control (1) and the pedal (10) to a stationary surface (4) of the vehicle by means of a common fastening element (3).

11. A method according to claim 10, **characterised by** the step of fitting the driving seat (11) separately in the vehicle in a predetermined position relative to the position of the fastening element (3).

12. A method according to claim 11, **characterised by** the step of determining the fitting position of the driving seat (11) by means of at least one positional indication (a, b) relative to at least one specific point (A, B) of the fastening element (3).

13. A method according to claim 12, **characterised by** the step of fitting the driving seat (11) by means of at least one fitting element (13) to a floor surface (14) of the vehicle, and determining by means of said positional indication (a, b) the perpendicular distance from the specific point (A, B) of the fastening element (3) to a certain point (20a, b) of the fitting element (13).

14. A method according to claim 13, **characterised by** the step of using said positional indication (a, b) to determine the distance from the specific point (A, B) of the fastening element (3) to a position for a prearranged hole (20a, b) through which a screw or the like may be inserted in order to fasten the fitting element (13) to the floor surface (14).

15. A method according to claim 14, **characterised by** the step of arranging the driving location in a bus.
